# EUROPÄISCHE PATENTANMELDUNG

(11) **EP 2 705 920 A2**
(43) Veröffentlichungstag der Anmeldung: **12.03.2014**
(21) Anmeldenummer: 13177568.6
(22) Anmeldetag: 23.07.2013
(51) Int. Cl.: B23G 5/04

(54) **Gewindeschneidglocke**

(30) Priorität: 07.09.2012 DE 102012108373
(71) Anmelder: EMUGE-Werk Richard Glimpel GmbH & Co.KG Fabrik für Präzisionswerkzeuge, 91207 Lauf a.d. Pegnitz (DE)
(72) Erfinder: Glimpel, Helmut, 91207 Lauf a. d. Pegnitz (DE); Pompe, Thomas, 90607 Rückersdorf (DE); Sperber, Matthias, 91244 Reichenschwand (DE)
(74) Vertreter: Schröer, Gernot H.

(57) **Zusammenfassung**

Die Erfindung betrifft eine Gewindeschneidglocke (1) zur Erzeugung eines Außengewindes an einem Werkstück, insbesondere einem bolzenförmigen Werkstück, umfassend einen um eine Rotationsachse (2) der Gewindeschneidglocke (1) drehbaren oder drehenden Trägerkörper (3) und mehrere am Trägerkörper (3) lösbar befestigte Schneidelemente (4), insbesondere Schneidplatten, wobei die Schneidelemente (4) eine einem Innenraum (5) der Gewindeschneidglocke (1) zugewandte Schneidseite (7) mit mehreren axial zueinander versetzten Schneidzähnen (8) aufweisen.

Bei der erfindungsgemäßen Gewindeschneidglocke sind die Schneidzähne (8) der Schneidelemente (4) entlang einer die Rotationsachse (2) im Wesentlichen spiralförmig umlaufenden Gewindeerzeugungskurve aufeinanderfolgend angeordnet, wobei die Steigung der Gewindeerzeugungskurve im Wesentlichen der Steigung des zu erzeugenden Außengewindes entspricht.

## Beschreibung

Die Erfindung betrifft eine Gewindeschneidglocke zur Erzeugung eines Außengewindes an einem Werkstück, insbesondere einem bolzenförmigen Werkstück, gemäß dem Oberbegriff des Anspruchs 1.

Die Gewindeschneidglocke umfasst einen um eine Rotationsachse der Gewindeschneidglocke drehbaren oder drehenden Trägerkörper und mehrere am Trägerkörper lösbar befestigte Schneidelemente, insbesondere Schneidplatten, wobei die Schneidelemente eine einem Innenraum der Gewindeschneidglocke zugewandte Schneidseite mit mehreren axial zueinander versetzten Schneidzähnen aufweisen. Unter axialem Versatz wird hierbei ein Versatz im Wesentlichen parallel zur Rotationsachse verstanden, wobei durchaus zusätzlich auch eine Änderung des radialen Abstands der axial zueinander versetzten Schneidzähne zur Rotationsachse auftreten kann.

Der vorliegenden Erfindung liegt die Aufgabe zugrunde, eine neue Gewindeschneidglocke anzugeben.

Diese Aufgabe wird durch die Merkmale des Anspruchs 1 gelöst. Vorteilhafte Ausgestaltungen und Weiterbildungen sind in den jeweils abhängigen Ansprüchen angegeben.

Die erfindungsgemäße Gewindeschneidglocke ist dadurch gekennzeichnet, dass die Schneidzähne der Schneidelemente entlang einer die Rotationsachse im Wesentlichen spiralförmig umlaufenden Gewindeerzeugungskurve aufeinanderfolgend angeordnet sind, wobei die Steigung der Gewindeerzeugungskurve im Wesentlichen der Steigung des zu erzeugenden Außengewindes entspricht.

Eine Weiterbildung sieht vor, dass die Schneidelemente derart ausgebildet und am Trägerkörper befestigt sind, dass einige oder alle Schneidzähne einen positiven Spanwinkel und/oder einen positiven Freiwinkel aufweisen. Der Spanwinkel und/oder der Freiwinkel der Schneidzähne mit positivem Spanwinkel und/oder mit positivem Freiwinkel kann beispielsweise zwischen 10 Winkelminuten und 3 Grad liegt, insbesondere zwischen 10 Winkelminuten und 60 Winkelminuten, vorzugsweise bei etwa 24 Winkelminuten.

Der Freiwinkel ist der Winkel zwischen einer Tangente an die Schneidseite eines Schneidelements an der Schneidkante und einer Senkrechten zum Radius der Gewindeschneidglocke durch die vorgenannte Schneidkante (Gerade senkrecht zur Rotationsachse). Der Freiwinkel ist bei einer Neigung der Tangente gegenüber der Senkrechten zum Radius in vorgesehener Drehrichtung der Gewindeschneidglocke positiv und bei einer Neigung entgegen der vorgesehenen Drehrichtung negativ.

Der Spanwinkel ist der Winkel zwischen einer Tangente an eine in vorgesehener Drehrichtung um die Rotationsachse vorlaufenden Spanfläche an der Schneidkante des Scheidelements und dem Radius der Gewindeschneidglocke durch die vorgenannte Schneidkante. Der Spanwinkel ist bei einer Neigung der vorgenannten Tangente an die Spanfläche gegenüber dem Radius in vorgesehener Drehrichtung negativ und bei einer Neigung entgegen der vorgesehenen Drehrichtung positiv.

Eine Ausführungsvariante der Erfindung sieht vor, dass die Schneidelemente derart am Trägerkörper befestigt sind, dass die in einer vorgesehenen Drehrichtung um die Rotationsachse vorauslaufende Spanfläche jedes Schneidelements eine Ebene definiert, die parallel zur Rotationsachse ausgerichtet ist, die Rotationsachse jedoch nicht enthält.

Eine Weiterbildung der erfindungsgemäßen Gewindeschneidglocke sieht vor, dass die Gewindeerzeugungskurve in einem Eingangsbereich des Innenraums der Gewindeschneidglocke einen Anschnittbereich aufweist, auf den in den Innenraum der Gewindeschneidglocke hinein ein Vollprofilbereich (auch: Führungsbereich) der Gewindeerzeugungskurve folgt, wobei die Schneidzähne im Vollprofilbereich im Wesentlichen gleichförmig ausgebildet sind, insbesondere in einem Querschnitt im Wesentlichen einem Querschnittsprofil des zu erzeugenden Gewindes entsprechen, wobei ferner die Schneidzähne im Anschnittbereich im Vergleich zu den Schneidzähnen des Vollprofilbereichs abgeflacht ausgebildet sind, und wobei die Abflachung der Schneidzähne im Anschnittbereich entlang der Gewindeerzeugungskurve zum Vollprofilbereich hin abnimmt. Unter Abflachung wird hierbei jegliche Verkleinerung des Querschnittsprofils der Schneidzähne im Vergleich zum Querschnittsprofil der Schneidzähne im Vollprofilbereich verstanden. Vorzugsweise weisen alle Schneidzähne im Anschnittbereich einen positiven Spanwinkel und/oder einen positiven Freiwinkel auf. Die Schneidzähne im Vollprofilbereich können jedoch ohne Freiwinkel, das heißt mit einem Freiwinkel von 0 Grand, ausgebildet sein, was ein Verschneiden des Gewindes verhindern kann.

Eine Ausführungsvariante der Erfindung sieht vor, dass die Schneidseiten der Schneidelemente ausgehend von einem Eingangsbereich des Innenraums der Gewindeschneidglocke in den Innenraum der Gewindeschneidglocke hinein axial auf die Schneidzähne folgende und axial zueinander versetzt angeordnete Formkeile aufweisen, wobei die Formkeile der Schneidelemente entlang einer die Rotationsachse im Wesentlichen spiralförmig umlaufenden Formgebungskurve aufeinanderfolgend angeordnet sind, die in den Innenraum der Gewindeschneidglocke hinein an die Gewindeerzeugungskurve anschließt, und wobei ferner die Steigung der Formgebungskurve im Wesentlichen der Steigung der Gewindeerzeugungskurve entspricht. Das Vorsehen dieser Formkeile und damit die Ausbildung eines Formteils würde zum einen das Verschneiden des Gewindes verhindern und es würde ferner die erzeugte Oberfläche verbessern. Insbesondere kann hierbei die Gewindeerzeugungskurve als Anschnittbereich ausgebildet sein, in dem die Schneidzähne gegenüber einem letzten an die Formgebungskurve angrenzenden Schneidzahn abgeflacht sind, wobei die Abflachung der Schneidzähne entlang der Gewindeerzeugungskurve zur Formgebungskurve hin abnimmt. Unter Abflachung wird hierbei analog zur vorstehenden Definition jegliche Verkleinerung des Querschnittsprofils der Schneidzähne im Vergleich zum Querschnittsprofil des letzten Schneidzahns verstanden.

I m Unterschied zur schneidenden Werkstückbearbeitung durch die Schneidzähne erfolgt die Werkstückbearbeitung durch die Formkeile formend, das heißt ohne Materialabtragung. Die Formkeile werden beispielsweise auch als Drückstollen bezeichnet.

Eine Weiterbildung der erfindungsgemäßen Gewindeschneidglocke sieht vor, dass die Schneidelemente derart ausgebildet und am Trägerkörper befestigt sind, dass die Schneidseiten der Schneidelemente im Wesentlichen parallel zur Rotationsachse verlaufen. Alternativ kann aber auch vorgesehen sein, dass die Schneidelemente derart ausgebildet und am Trägerkörper befestigt sind, dass die Schneidseiten der Schneidelemente ausgehend von einem Eingangsbereich des Innenraums der Gewindeschneidglocke in den Innenraum hinein gegenüber einer Parallelen zur Rotationsachse derart um einen Neigungswinkel geneigt sind, dass der Abstand der Schneidseiten und damit auch der Schneidzähne bzw. der Spitzen der Schneidzähne von der Rotationsachse in den Innenraum hinein zunimmt. Dies führt dazu, dass die Schneidseiten der Schneidelemente einen konisch vom Eingangsbereich ausgehend nach innen größer bzw. breiter werdenden Innenraum der Gewindescheidglocke definieren. Dies hat den Vorteil, dass sich die Reibung bei der Gewindeerzeugung deutlich vermindert. Ein möglicher Winkelbereich für diese Konizität der Schneidelemente beträgt zwischen 0,5 und 2 Winkelminuten.

Bei der erfindungsgemäßen Gewindeschneidglocke kann auch vorgesehen sein, dass die Schneidelemente als Wendeschneidelemente ausgebildet sind, die zusätzlich zur Schneidseite mindestens eine entsprechend der Schneidseite ausgebildete Ersatzschneidseite aufweisen, wobei die Schneidelemente derart am Trägerkörper befestigbar sind, dass die Ersatzschneidseite die Schneidseite ersetzt und bei der Erzeugung des Außengewindes am Werkstück zum Einsatz kommt. Bevorzug ist eine Ersatzschneidseite an der der Schneidseite gegenüberliegenden Seite des Schneidelements vorgesehen.

Die Schneidelemente der erfindungsgemäßen Gewindeschneidglocke können jeweils mit einer Befestigungsseite an eine Anlagefläche des Trägerkörpers angelegt sein. Hierbei ist es von Vorteil, wenn Befestigungsseite und Anlagefläche ein jeweils mehrere Rillen umfassendes Profil aufweisen, wobei diese Profile bei einer Anordnung des jeweiligen Schneidelements mit seiner Befestigungsseite an der Anlagefläche ineinander greifen und auf diese Weise einen positionsgenauen und stabilen Sitz des Schneidelements am Trägerkörper sicherstellen. Zweckmäßigerweise sind die Rillen der jeweils mehrere Rillen umfassenden Profile der Anlagefläche des Trägerkörpers und der Befestigungsseite des Schneidelements im Wesentlichen gleichartig ausgebildet und/oder sie weisen ein im Wesentlichen gleiches Querschnittsprofil auf.

Die Schneidelemente der erfindungsgemäßen Gewindeschneidglocke können aus Schnellarbeitsstahl, insbesondere aus HSS-E, hergestellt sein. Diese Schneidelemente können zum Beispiel in einem weichen Zustand mittels einer gesteuerten Maschine, beispielsweise einer CNC-Fräsmaschine, hergestellt werden. Durch die Bearbeitung mittels einer gesteuerten Maschine kann der Freiwinkel in Form und Größe individuell gefertigt werden.

Bei den erfindungsgemäßen Gewindeschneidglocken kann eine zentrale Kühlmittelzufuhr vorgesehen sein.

Die Erfindung wird nachstehend auch hinsichtlich weiterer Merkmale und Vorteile anhand der Beschreibung von Ausführungsbeispielen und unter Bezugnahme auf die beiliegenden Zeichnungen näher erläutert. Dabei zeigen
- FIG 1: ein Ausführungsbeispiel einer erfindungsgemäßen Gewindeschneidglocke in einer räumlichen Darstellung,
- FIG 2: das Ausführungsbeispiel nach FIG 1 in einer weiteren räumlichen Darstellung,
- FIG 3: einen Schnitt vertikal zur Rotationsachse durch ein an einem Trägerkörper einer erfindungsgemäßen Gewindeschneidglocke befestigtes Schneidelement,
- FIG 4: ein Ausführungsbeispiel eines Schneidelements einer erfindungsgemäßen Gewindeschneidglocke in einer räumlichen Darstellung,
- FIG 5: das Ausführungsbeispiel eines Schneidelements nach FIG 4 in einer Detailansicht auf die in FIG 4 obere Seite des Schneidelements,
- FIG 6: ein alternatives Ausführungsbeispiel eines Schneidelements einer erfindungsgemäßen Gewindeschneidglocke in einer räumlichen Darstellung,
- FIG 7: das Ausführungsbeispiel eines Schneidelements nach FIG 6 in einer Detailansicht auf die in FIG 6 obere Seite des Schneidelements, und
- FIG 8: in einer Ausschnittdarstellung die Anbringung eines weiteren Ausführungsbeispiels eines Schneidelements einer erfindungsgemäßen Gewindeschneidglocke an einem Trägerkörper.

Einander entsprechende Teile und Komponenten sind in den Figuren mit den gleichen Bezugszeichen bezeichnet.

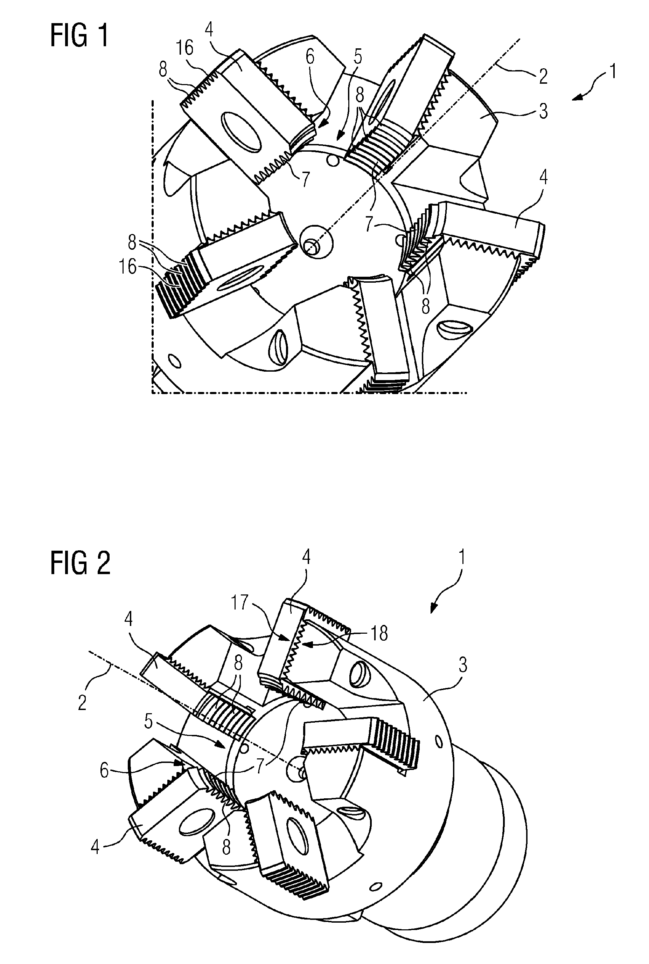

FIG 1 und FIG 2 zeigen aus unterschiedlichen Perspektiven ein Ausführungsbeispiel einer erfindungsgemäßen Gewindeschneidglocke 1 mit einem um eine Rotationsachse 2 der Gewindeschneidglocke 1 drehbaren oder drehenden Trägerkörper 3 und mehrere am Trägerkörper 3 lösbar befestigten Schneidelementen 4. Die Schneidelemente 4 weisen eine einem Innenraum 5 der Gewindeschneidglocke 1 zugewandte Schneidseite 7 mit mehreren axial zueinander versetzten Schneidzähnen 8 auf. Unter axialem Versatz wird hierbei ein Versatz im Wesentlichen parallel zur Rotationsachse 2 verstanden, wobei durchaus auch zusätzlich eine Änderung des radialen Abstands der axial zueinander versetzten Schneidzähne 8 zur Rotationsachse 2 auftreten kann. Die Gewindeschneidglocke 1 ist geeignet zur Erzeugung eines Außengewindes an einem Werkstück, insbesondere einem bolzenförmigen Werkstück. Hierzu wird das Werkstück in den Innenraum 5 der sich um die Rotationsachse 2 drehenden Gewindeschneidglocke 1 eingeführt bzw. die Gewindeschneidglocke 1 über das Werkstück gestülpt, so dass das Werkstück bei der Gewindeerzeugung durch die drehende Gewindeschneidglocke 1 von einem Eingangsbereich 6 des Innenraums 5 der Gewindeschneidglocke 1 in den Innenraum 5 vorgeschoben wird.

Die Schneidzähne 8 der Schneidelemente 4, durch die das Gewinde am Werkstück erzeugt wird, sind entlang einer die Rotationsachse 2 im Wesentlichen spiralförmig umlaufenden Gewindeerzeugungskurve aufeinanderfolgend angeordnet. Die Steigung dieser Gewindeerzeugungskurve entspricht im Wesentlichen der Steigung des zu erzeugenden Außengewindes. Bei der Gewindeerzeugung dreht sich die Gewindeschneidglocke 1 um die Rotationsachse 2 und es erfolgt hierbei eine Vorschubbewegung des zu bearbeitenden Werkstücks in den Innenraum 5 der Gewindeschneidglocke 1 hinein, durch axiale Bewegung der Gewindeschneidglocke 1 relativ zum Werkstück und/oder durch axiale Bewegung des Werkstücks relativ zur Gewindeschneidglocke 1. Die Schneidzähne 8 schneiden bzw. greifen hierbei kontinuierlich in das Werkstück ein, die Gewindeerzeugung erfolgt durch kontinuierlichen Schnitt bzw. Eingriff und nicht durch ein Fräsen, bei dem im Unterschied zur hier vorgesehenen Bewegung der Gewindeschneidglocke 1 zusätzlich zur Rotationsbewegung und zum Vorschub des Werkzeugs eine Zirkularbewegung des Werkzeugs erfolgt.

Bei den Schneidelementen 4 handelt es sich konkret um Schneidplatten, die als Wendeschneidelemente ausgebildet sind, die zusätzlich zur Schneidseite 7 an einer der Schneidseite 7 gegenüberliegenden Seite eine entsprechend der Schneidseite 7 ausgebildete Ersatzschneidseite 16 aufweisen. Die Schneidelemente 4 sind alternativ zur in FIG 1 und FIG 2 dargestellten Anbringung auch derart am Trägerkörper 3 befestigbar, dass die Ersatzschneidseite 16 die Schneidseite 7 ersetzt und bei der Erzeugung des Außengewindes am Werkstück zum Einsatz kommt.

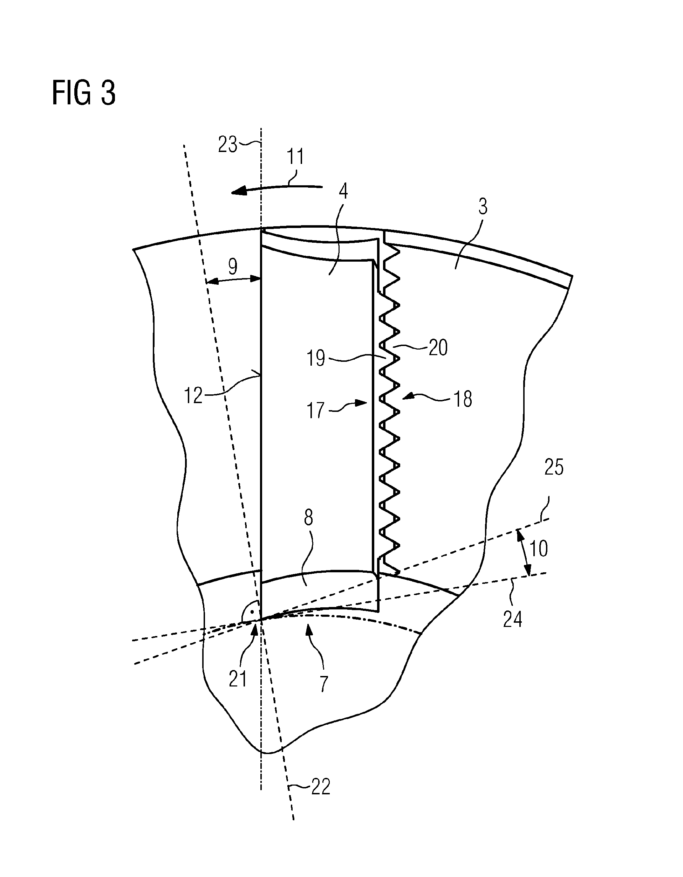

FIG 3 verdeutlich in einer hinsichtlich der Winkel übertriebenen Darstellung die Ausbildung von Spanwinkel 9 und Freiwinkel 10 an einer Schneidkante 21 eines Schneidzahns 8 eines an einem Trägerkörper 3 einer erfindungsgemäßen Gewindeschneidglocke 1 befestigten Schneidelements 4. Eine vorgesehene Drehrichtung der Gewindeschneidglocke 1 ist durch einen Pfeil 11 angegeben.

Der Freiwinkel 10 ist der Winkel zwischen einer Tangente 25 an die Schneidseite 7 eines Schneidelements 4 an der Schneidkante 21 und einer Senkrechten 24 zum Radius 22 der Gewindeschneidglocke 1 durch die vorgenannte Schneidkante 21, wobei der Radius 22 eine Gerade senkrecht zur Rotationsachse 2 ist. Der Freiwinkel 10 ist bei einer Neigung der Tangente 24 gegenüber der Senkrechten 25 zum Radius 22 in vorgesehener Drehrichtung 11 der Gewindeschneidglocke 1 positiv und bei einer Neigung entgegen der vorgesehenen Drehrichtung 11 negativ.

Der Spanwinkel 9 ist der Winkel zwischen einer Tangente 23 an eine in vorgesehener Drehrichtung 11 um die Rotationsachse 2 vorlaufenden Spanfläche 12 an der Schneidkante 21 und dem Radius 22 der Gewindeschneidglocke 1 durch die vorgenannte Schneidkante 21. Der Spanwinkel 9 ist bei einer Neigung der vorgenannten Tangente 23 an die Spanfläche 12 gegenüber dem Radius 22 in vorgesehener Drehrichtung 11 negativ und bei einer Neigung entgegen der vorgesehenen Drehrichtung 11 positiv.

Im in FIG 3 dargestellten Beispiel sind Spanwinkel 9 und Freiwinkel 10 positiv. An dem Schneidelement 4 können alle Schneidzähne 8 wie der in FIG 3 gezeigte Schneidzahn 8 mit positivem Spanwinkel 9 und positivem Freiwinkel 10 ausgebildet sein (siehe beispielsweise das Ausführungsbeispiel nach FIG 1 und FIG 2), es können aber auch nur einzelne Schneidzähne 8 derart ausgebildet sein.

Die in FIG 1, FIG 2 und FIG 3 gezeigten Schneidelemente 4 sind derart am Trägerkörper 3 befestigt, dass die in einer vorgesehenen Drehrichtung 11 um die Rotationsachse 2 vorauslaufende Spanfläche 12 jedes Schneidelements 4 eine Ebene definiert, die parallel zur Rotationsachse 2 ausgerichtet ist, die Rotationsachse 2 jedoch nicht enthält. Der Radius 22 verläuft somit nicht in der Spanfläche 12. Diese gegenüber dem Radius 22 versetzte bzw. gedrehte Anordnung der Spanfläche 12 und damit des Schneidelements 4 stellt eine Möglichkeit zur Ausbildung des vorstehend angesprochenen positiven Spanwinkels 9 an der Schneidkante 21 dar.

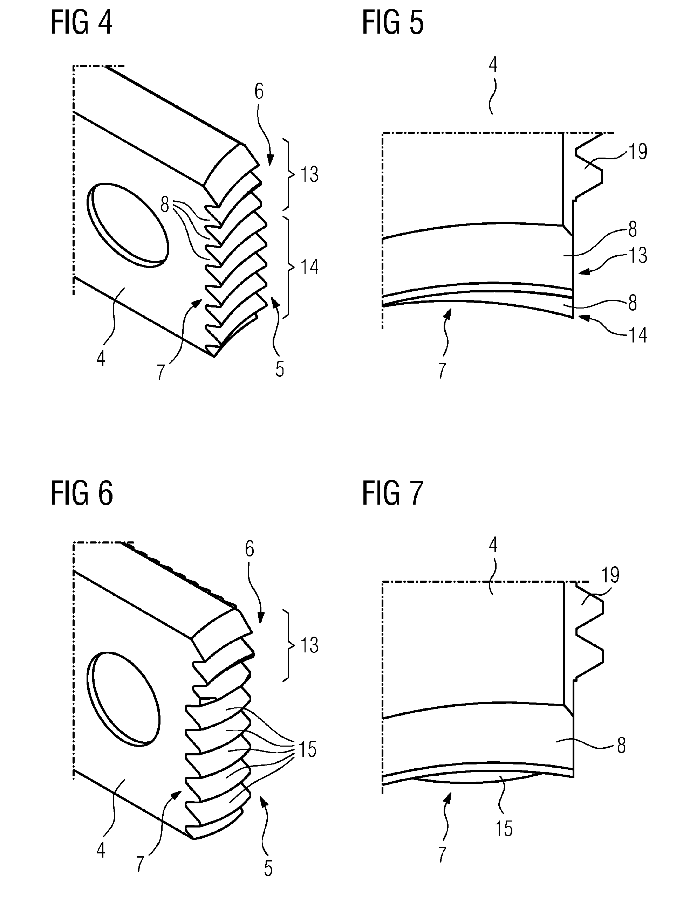

FIG 4 und FIG 5 zeigen ein Ausführungsbeispiel eines Schneidelements 4 einer erfindungsgemäßen Gewindeschneidglocke 1. Die Schneidzähne 8 an der Schneidseite 7 weisen in einem Eingangsbereich 6 des Innenraums 5 der Gewindeschneidglocke 1 einen Anschnittbereich 13 auf, auf den in den Innenraum 5 der Gewindeschneidglocke 1 hinein ein Vollprofilbereich 14 folgt. Die Schneidzähne 8 im Vollprofilbereich 14 sind im Wesentlichen gleichförmig ausgebildet, sie entsprechen in einem Querschnitt im Wesentlichen einem Querschnittsprofil des zu erzeugenden Gewindes. Die Schneidzähne 8 im Anschnittbereich 13 hingegen sind im Vergleich zu den Schneidzähnen 8 des Vollprofilbereichs 14 abgeflacht ausgebildet. Die Abflachung der Schneidzähne 8 nimmt im Anschnittbereich 13 entlang der Gewindeerzeugungskurve über alle Schneidelemente 4 hinweg zum Vollprofilbereich 14 hin ab. FIG 5 zeigt, dass die Schneidzähne 8 im Anschnittbereich 13 einen im Vergleich zu den Schneidzähnen 8 im Vollprofilbereich 14 größeren positiven Freiwinkel 10 aufweisen. Die Schneidzähne 8 im Vollprofilbereich 14 können jedoch auch ohne Freiwinkel 10, das heißt mit einem Freiwinkel 10 von 0 Grand, ausgebildet sein, und lediglich die Schneidzähne 8 im Anschnittbereich 13 weisen dann einen positiven Freiwinkel 10 auf. Ferner können die Schneidelemente 4 derart am Trägerkörper 3 angeordnet sein, dass alle Schneidzähne 8 einen positiven Spanwinkel 9 aufweisen.

FIG 6 und FIG 7 zeigen ein alternatives Ausführungsbeispiel eines Schneidelements 4 einer erfindungsgemäßen Gewindeschneidglocke 1. Wie beim Ausführungsbeispiel nach FIG 4 und FIG 5 bilden die Schneidzähne 8 an der Schneidseite 7 in einem Eingangsbereich 6 des Innenraums 5 der Gewindeschneidglocke 1 einen Anschnittbereich 13. In diesem Fall folgen jedoch in den Innenraum 5 der Gewindeschneidglocke 1 hinein axial auf die Schneidzähne 8 mehrere Formkeile 15, die wie die Schneidzähne 8 axial zueinander versetzt angeordnete sind. Die Formkeile 15 aller Schneidelemente 4 sind entlang einer die Rotationsachse 2 im Wesentlichen spiralförmig umlaufenden Formgebungskurve aufeinanderfolgend angeordnet, die in den Innenraum 5 der Gewindeschneidglocke 1 hinein an die Gewindeerzeugungskurve der Schneidzähne 8 anschließt. Die Steigung der Formgebungskurve entspricht hierbei im Wesentlichen der Steigung der Gewindeerzeugungskurve und damit der Steigung des zu erzeugenden Gewindes. Der Anschnittbereich 13 der Schneidzähne 8 ist derart ausgebildet, dass die Schneidzähne 8 gegenüber einem letzten an die Formgebungskurve angrenzenden Schneidzahn abgeflacht sind, wobei die Abflachung der Schneidzähne 8 entlang der Gewindeerzeugungskurve zur Formgebungskurve hin abnimmt. FIG 7 verdeutlicht die unterschiedliche Ausbildung von Schneidzähnen 8 und Formkeilen 15.

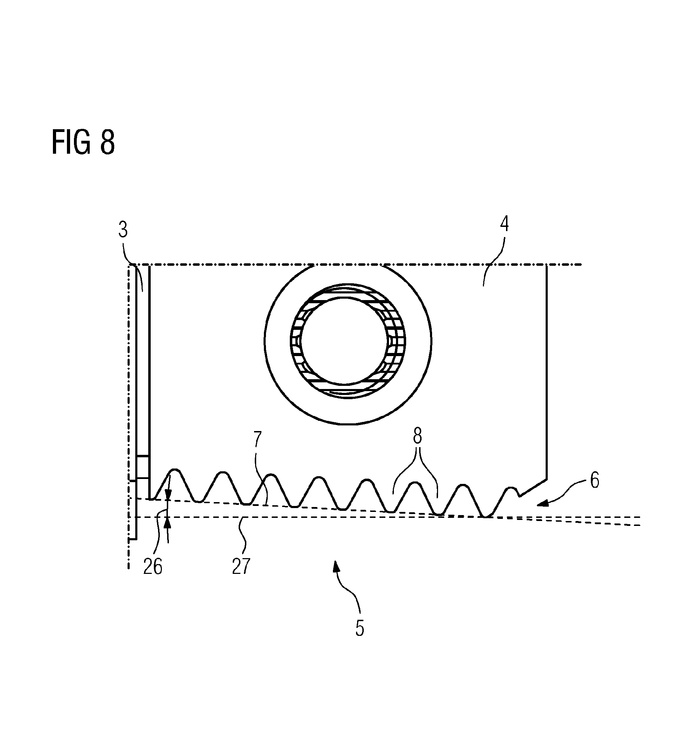

Die Schneidelemente 4 können derart ausgebildet und am Trägerkörper 3 befestigt sein, dass die Schneidseiten 7 der Schneidelemente 4 im Wesentlichen parallel zur Rotationsachse 2 verlaufen (unter Nichtbeachtung der Schneidzähne 8 bzw. Formkeile 15). FIG 8 zeigt im Unterschied hierzu in einer Ausschnittdarstellung die Anbringung eines weiteren Ausführungsbeispiels eines Schneidelements 4 einer erfindungsgemäßen Gewindeschneidglocke 1 an einem Trägerkörper 3. In diesem Fall ist das Schneidelement 4 derart ausgebildet und am Trägerkörper 3 befestigt, dass die Schneidseite 7 des Schneidelements 4 ausgehend von einem Eingangsbereich 6 des Innenraums 5 der Gewindeschneidglocke 1 in den Innenraum 5 hinein gegenüber einer Parallelen 27 zur Rotationsachse 2 derart um einen Neigungswinkel 26 geneigt ist, dass der Abstand der Schneidseiten 7 von der Rotationsachse 2 in den Innenraum 5 hinein zunimmt.

Die in FIG 1 bis FIG 7 gezeigten Schneidelemente 4 sind jeweils mit einer Befestigungsseite 17 an eine Anlagefläche 18 des Trägerkörpers 3 angelegt. Dies verdeutlicht am besten FIG 3. Die Befestigungsseite 17 und die Anlagefläche 18 weisen jeweils ein mehrere Rillen 19, 20 umfassendes Profil auf, wobei diese Profile bei einer Anordnung des jeweiligen Schneidelements 4 mit seiner Befestigungsseite 17 an der Anlagefläche 18 ineinander greifen und auf diese Weise einen positionsgenauen und stabilen Sitz des Schneidelements 4 am Trägerkörper 3 sicherstellen. Die Rillen 19, 20 der jeweils mehrere Rillen 19, 20 umfassenden Profile der Anlagefläche 18 des Trägerkörpers 3 und der Befestigungsseite 17 des Schneidelements 4 sind im Wesentlichen gleichartig ausgebildet, sie weisen ein im Wesentlichen gleiches Querschnittsprofil auf.

### Bezugszeichenliste

- 1: Gewindeschneidglocke
- 2: Rotationsachse
- 3: Trägerkörper
- 4: Schneidelement
- 5: Innenraum
- 6: Eingangsbereich des Innenraums 5
- 7: Schneidseite
- 8: Schneidzähne
- 9: Spanwinkel
- 10: Freiwinkel
- 11: Vorgesehene Drehrichtung
- 12: Spanfläche
- 13: Anschnittbereich
- 14: Vollprofilbereich
- 15: Formkeile
- 16: Ersatzschneidseite
- 17: Befestigungsseite
- 18: Anlagefläche
- 19: Rille
- 20: Rille
- 21: Schneidkante
- 22: Radius
- 23: Tangente an Spanfläche 12
- 24: Senkrechte zum Radius 22
- 25: Tangente an Schneidseite 7
- 26: Neigungswinkel der Schneidseite 7
- 27: Parallele zur Rotationsachse 2

## Patentansprüche

1. Gewindeschneidglocke (1) zur Erzeugung eines Außengewindes an einem Werkstück, insbesondere einem bolzenförmigen Werkstück, umfassend einen um eine Rotationsachse (2) der Gewindeschneidglocke (1) drehbaren oder drehenden Trägerkörper (3) und mehrere am Trägerkörper (3) lösbar befestigte Schneidelemente (4), insbesondere Schneidplatten, wobei die Schneidelemente (4) eine einem Innenraum (5) der Gewindeschneidglocke (1) zugewandte Schneidseite (7) mit mehreren axial zueinander versetzten Schneidzähnen (8) aufweisen,
**dadurch gekennzeichnet, dass**
die Schneidzähne (8) der Schneidelemente (4) entlang einer die Rotationsachse (2) im Wesentlichen spiralförmig umlaufenden Gewindeerzeugungskurve aufeinanderfolgend angeordnet sind,
wobei die Steigung der Gewindeerzeugungskurve im Wesentlichen der Steigung des zu erzeugenden Außengewindes entspricht.

2. Gewindeschneidglocke (1) nach Anspruch 1,
**dadurch gekennzeichnet, dass**
die Schneidelemente (4) derart ausgebildet und am Trägerkörper (3) befestigt sind, dass einige oder alle Schneidzähne (8) einen positiven Spanwinkel (9) und/oder einen positiven Freiwinkel (10) aufweisen.

3. Gewindeschneidglocke (1) nach Anspruch 2,
**dadurch gekennzeichnet, dass**
der Spanwinkel (9) und/oder der Freiwinkel (10) der Schneidzähne (8) mit positivem Spanwinkel (9) und/oder mit positivem Freiwinkel (10) zwischen 10 Winkelminuten und 3 Grad liegt, insbesondere zwischen 10 Winkelminuten und 60 Winkelminuten, vorzugsweise bei etwa 24 Winkelminuten.

4. Gewindeschneidglocke (1) nach einem der vorhergehenden Ansprüche,
**dadurch gekennzeichnet, dass**
die Schneidelemente (4) derart am Trägerkörper (3) befestigt sind, dass die in einer vorgesehenen Drehrichtung (11) um die Rotationsachse (2) vorauslaufende Spanfläche (12) jedes Schneidelements (4) eine Ebene definiert, die parallel zur Rotationsachse (2) ausgerichtet ist, die Rotationsachse (2) jedoch nicht enthält.

5. Gewindeschneidglocke (1) nach einem der vorhergehenden Ansprüche,
**dadurch gekennzeichnet, dass**
die Gewindeerzeugungskurve in einem Eingangsbereich (6) des Innenraums (5) der Gewindeschneidglocke (1) einen Anschnittbereich (13) aufweist, auf den in den Innenraum (5) der Gewindeschneidglocke (1) hinein ein Vollprofilbereich (14) der Gewindeerzeugungskurve folgt,
wobei die Schneidzähne (8) im Vollprofilbereich (14) im Wesentlichen gleichförmig ausgebildet sind, insbesondere in einem Querschnitt im Wesentlichen einem Querschnittsprofil des zu erzeugenden Gewindes entsprechen,
wobei die Schneidzähne (8) im Anschnittbereich (13) im Vergleich zu den Schneidzähnen (8) des Vollprofilbereichs (14) abgeflacht ausgebildet sind, und
wobei die Abflachung der Schneidzähne (8) im Anschnittbereich (13) entlang der Gewindeerzeugungskurve zum Vollprofilbereich (14) hin abnimmt.

6. Gewindeschneidglocke (1) nach Anspruch 5 und nach Anspruch 2,
**dadurch gekennzeichnet, dass**
alle Schneidzähne (8) im Anschnittbereich (13) einen positiven Spanwinkel (9) und/oder einen positiven Freiwinkel (10) aufweisen.

7. Gewindeschneidglocke (1) nach einem der vorhergehenden Ansprüche,
**dadurch gekennzeichnet, dass**
die Schneidseiten (7) der Schneidelemente (4) ausgehend von einem Eingangsbereich (6) des Innenraums(5) der Gewindeschneidglocke (1) in den Innenraum (5) der Gewindeschneidglocke (1) hinein axial auf die Schneidzähne (8) folgende und axial zueinander versetzt angeordnete Formkeile (15) aufweisen,
wobei die Formkeile (15) der Schneidelemente (4) entlang einer die Rotationsachse (2) im Wesentlichen spiralförmig umlaufenden Formgebungskurve aufeinanderfolgend angeordnet sind, die in den Innenraum (5) der Gewindeschneidglocke (1) hinein an die Gewindeerzeugungskurve anschließt, und
wobei die Steigung der Formgebungskurve im Wesentlichen der Steigung der Gewindeerzeugungskurve entspricht.

8. Gewindeschneidglocke (1) nach Anspruch 7,
**dadurch gekennzeichnet, dass**
die Gewindeerzeugungskurve als Anschnittbereich (13) ausgebildet ist, in dem die Schneidzähne (8) gegenüber einem letzten an die Formgebungskurve angrenzenden Schneidzahn abgeflacht sind, wobei die Abflachung der Schneidzähne (8) entlang der Gewindeerzeugungskurve zur Formgebungskurve hin abnimmt.

9. Gewindeschneidglocke (1) nach einem der vorhergehenden Ansprüche,
**dadurch gekennzeichnet, dass**
die Schneidelemente (4) derart ausgebildet und am Trägerkörper (3) befestigt sind, dass die Schneidseiten (7) der Schneidelemente (4) im Wesentlichen parallel zur Rotationsachse (2) verlaufen.

10. Gewindeschneidglocke (1) nach einem der Ansprüche 1 bis 8,
**dadurch gekennzeichnet, dass**
die Schneidelemente (4) derart ausgebildet und am Trägerkörper (3) befestigt sind, dass die Schneidseiten (7) der Schneidelemente (4) ausgehend von einem Eingangsbereich (6) des Innenraums(5) der Gewindeschneidglocke (1) in den Innenraum (5) hinein gegenüber einer Parallelen (27) zur Rotationsachse (2) derart um einen Neigungswinkel (26) geneigt sind, dass der Abstand der Schneidseiten (7) von der Rotationsachse (2) in den Innenraum (5) hinein zunimmt.

11. Gewindeschneidglocke (1) nach einem der vorhergehenden Ansprüche,
**dadurch gekennzeichnet, dass**
die Schneidelemente (4) als Wendeschneidelemente ausgebildet sind, die zusätzlich zur Schneidseite (7) mindestens eine entsprechend der Schneidseite (7) ausgebildete Ersatzschneidseite (16) aufweisen, wobei die Schneidelemente (4) derart am Trägerkörper (3) befestigbar sind, dass die Ersatzschneidseite (16) die Schneidseite (7) ersetzt und bei der Erzeugung des Außengewindes am Werkstück zum Einsatz kommt.
